# DEMANDE DE BREVET EUROPEEN

(11) **EP 4 764 101 A1**
(43) Date de publication de la demande: **24.06.2026**
(21) Numéro de dépôt: 25223445.5
(22) Date de dépôt: 15.12.2025
(51) Int. Cl.: E04B 1/348

(54) **DISPOSITIF D'ASSEMBLAGE**

(30) Priorité: 20.12.2024 FR 2414826
(71) Demandeur: A. RAYMOND ET CIE, 38000 Grenoble (FR)
(72) Inventeur: BÉGIN-DROLET, André, 38000 Grenoble (FR); TALBOT, Jonathan, 38000 Grenoble (FR); PETITFILS, Nicolas, 38000 Grenoble (FR); BIZZINI, Olivier, 38000 Grenoble (FR); LENGAIGNE, Alban, 38000 Grenoble (FR); KROH, Dominique, 38000 Grenoble (FR); ROUZEVAL, Isabelle, 38000 Grenoble (FR)
(74) Mandataire: IP Trust

(57) **Abrégé**

L'invention concerne un dispositif d'assemblage (1) pour l'assemblage de deux modules dits respectivement premier module et deuxième module, le dispositif d'assemblage (1) comprenant :
- une première cale (20) destinée à être solidaire du premier module et pourvue d'une première face;
- un moyen de liaison configuré pour attacher le premier module au deuxième module ;
- une deuxième cale (30) pourvue d'une deuxième face ;
- un moyen de blocage destiné à être intercalé entre la première face et la deuxième face, et qui sous l'effet d'un effort d'appui exercé par l'une de la première face et de la deuxième face vers l'autre de la première face et de la deuxième face, se déforme de manière à empêcher tout mouvement dudit moyen de blocage et du moyen de liaison selon les directions d'un plan défini par la première face.

## Description

### DOMAINE DE L'INVENTION

La présente invention se rapporte au domaine des dispositifs d'assemblage, notamment au domaine des dispositifs d'assemblage de modules. Plus particulièrement, la présente invention concerne un dispositif d'assemblage susceptible d'être mis en œuvre pour la construction modulaire de bâtiments.

### ARRIERE PLAN TECHNOLOGIQUE DE L'INVENTION

Les constructions préfabriquées comprennent généralement un assemblage de modules, par exemple de forme parallélépipédique rectangle. Ces derniers peuvent être fabriqués en usine et acheminés sur site en vue de leur assemblage afin de former un bâtiment. Notamment, la mise en œuvre de constructions modulaires offre une flexibilité en termes de destinations desdits bâtiments, et permet à cet égard de considérer des bâtiments résidentiels, des bâtiments professionnels et/ou commerciaux. En effet, les modules fabriqués en usines peuvent être conçus pour comprendre les aménagements nécessaires afin de répondre aux exigences associées à leur destination.

Plus particulièrement, il est possible de concevoir des modules présentant tous une forme générale standard mais dont les équipements peuvent varier en fonction du besoin. A cet égard, les modules peut être pourvus de plans de travail, de placards, de fenêtres, de portes, de sanitaire, de lavabos...

Une fois acheminés sur site, les modules peuvent être agencés les uns sur et/ou à côté des autres. Des moyens d'attache peuvent notamment être mis en œuvre afin de solidariser les modules entre eux. Notamment, un moyen d'attache peut comprendre un connecteur male disposé sur un module, dit premier module, et un connecteur femelle disposé sur un autre module, dit deuxième module. Plus particulièrement, le connecteur male est disposé sur un coin, dit coin male, du premier module tandis que le connecteur femelle est disposé sur un coin, dit coin femelle, du deuxième module, le premier coin et le deuxième coin étant choisis pour être en correspondance lorsque le deuxième module est posé sur le premier module.

Selon cette disposition, le connecteur male se trouve ainsi engagé dans le connecteur femelle et permet ainsi de solidariser le premier module avec le deuxième module. Cet engagement, sans autres considérations, peut nécessiter un alignement fin du connecteur male avec le connecteur femelle. Afin de pallier ce problème, le connecteur male peut être monté sur le premier module avec un jeu latéral autorisant de légers déplacements dudit connecteur male selon les directions du plan orthogonal à la direction d'extension dudit connecteur male.

Ainsi, la considération d'un tel jeu est particulièrement avantageuse dès lors qu'une pluralité de moyens d'attache sont mis en œuvre pour la solidarisation du premier module et du deuxième module.

Néanmoins, l'existence d'un tel jeu ne permet pas une fixation ferme des modules entre eux.

Ainsi, un but de la présente invention est de proposer un dispositif d'assemblage permettant une fixation ferme et sans jeu de modules.

### BREVE DESCRIPTION DE L'INVENTION

Le but de la présente invention est atteint par un dispositif d'assemblage pour l'assemblage de deux modules dits respectivement premier module et deuxième module, le dispositif d'assemblage comprenant :
- une première cale destinée à être solidaire du premier module et pourvue d'une première face;
- une deuxième cale pourvue d'une deuxième face ;
- un moyen de blocage destiné à être intercalé entre la première face et la deuxième face, et qui sous l'effet d'un effort d'appui exercé par l'une de la première face et de la deuxième face vers l'autre de la première face et de la deuxième face, se déforme de manière à empêcher tout mouvement dudit moyen de blocage selon les directions d'un plan défini par la première face.

Selon un mode de réalisation, ledit dispositif d'assemblage comprend en outre un moyen de liaison configuré pour attacher le premier module au deuxième module, le moyen de blocage étant également destiné à empêcher tout mouvement du moyen de liaison selon les directions d'un plan défini par la première face dès que ledit moyen de blocage est déformé sous l'effet d'un effort d'appui exercé par l'une de la première face et de la deuxième face vers l'autre de la première face et de la deuxième face.

Selon un mode de réalisation, le moyen de liaison comprend un connecteur male et un connecteur femelle, le connecteur male étant pourvu d'une base et d'un membre longitudinal qui s'étend selon une direction d'élongation à partir de la base, et le connecteur femelle étant destiné à coopérer avec le membre longitudinal.

Selon un mode de réalisation, le moyen de blocage comprend une plaque de blocage.

Selon un mode de réalisation, la plaque de blocage comprend une ouverture, dite ouverture intermédiaire, destinée à être traversée par le membre longitudinal.

Selon un mode de réalisation, la première cale et la deuxième cale sont configurées pour coopérer l'une avec l'autre par emboîtement, et de sorte la déformation du moyen de blocage résulte dudit emboîtement.

Selon un mode de réalisation, la deuxième cale comprend des parois latérales entre lesquelles la première cale est destinée à être emboîtée.

Selon un mode de réalisation, la plaque de blocage comprend des pattes latérales configurées pour être repliées contre les faces latérales de la première cale lors de l'emboîtement de la première cale dans la deuxième cale par coopération avec les parois latérales de la deuxième cale.

Selon un mode de réalisation, la plaque de blocage comprend au moins deux zones de prédécoupe, chaque zone de prédécoupe comprend des entailles traversantes configurées pour permettre une déformation de ladite zone de prédécoupe par poinçonnage, la première cale comprend des logements, dits premiers logements, débouchant par la première face, avantageusement de forme cylindrique, chaque premier logement étant destiné à être en correspondance avec une zone de prédécoupe, avantageusement, les entailles traversantes forment une croix.

Selon un mode de réalisation, ledit dispositif d'assemblage comprend des poinçons configurés pour déformer les zones de prédécoupe.

Selon un mode de réalisation, chaque poinçon comprend un pion, dit premier pion, porté par la deuxième cale et en projection par rapport à la deuxième face, chaque premier pion présentant une taille inférieure à celle des premiers logements.

Selon un mode de réalisation, chaque poinçon comprend une première rondelle et une deuxième rondelle entre lesquelles la plaque de blocage est destinée à être intercalée, chaque première rondelle est logée dans un premier logement, l'une ou l'autre de la première rondelle et de la deuxième rondelle est surmontée d'un pion, dit deuxième pion, destiné à traverser une ouverture traversante, dite ouverture de blocage, centrée sur la zone de prédécoupe de la plaque de blocage, l'ouverture de blocage présentant un diamètre supérieur à celui du deuxième pion, l'autre de la première rondelle et de la deuxième rondelle comprend une ouverture dans laquelle le deuxième pion est destiné à être guidé, chaque deuxième rondelle est d'une taille inférieure à celle des premiers logements de manière à permettre la déformation des zones de prédécoupe dès lors que lesdites deuxièmes rondelles sont en appui contre lesdites zones de prédécoupe.

Selon un mode de réalisation, l'ouverture intermédiaire est configurée pour être traversée sans jeu par le membre longitudinal, avantageusement, l'ouverture intermédiaire est conforme en termes de formes et de dimensions avec celles du membre longitudinal, chaque première rondelle est montée sans jeu dans le premier logement dans lequel elle est logée.

Selon un mode de réalisation, le moyen de blocage comprend une plaque additionnelle portant les deuxièmes rondelles et intercalée entre la deuxième cale et la plaque de blocage.

Selon un mode de réalisation, la plaque additionnelle comprend une ouverture, dite ouverture additionnelle, destinée à être traversée par le membre longitudinal, ladite ouverture additionnelle est configurée pour être traversée sans jeu par le membre longitudinal, avantageusement l'ouverture additionnelle est conforme en termes de formes et de dimensions du membre longitudinal, l'ouverture intermédiaire présente des dimensions supérieures à celles du membre longitudinal, chaque première rondelle est montée avec un jeu dans le premier logement dans lequel elle est logée.

Selon un mode de réalisation, le moyen de blocage comprend, intercalé entre la deuxième cale et la plaque de blocage, une plaque de déformation, la plaque de blocage comprend deux ailettes latérales et configurées pour se replier contre deux faces latérales, dites faces de blocage et opposées l'une de l'autre, de la première cale, la plaque de déformation étant configurée pour provoquer le pliage des ailettes latérales contre les faces de blocage dès lors que la deuxième cale presse ladite plaque de déformation contre la plaque de blocage.

Selon un mode de réalisation, l'ouverture intermédiaire est configurée pour être traversée sans jeu par le membre longitudinal, avantageusement l'ouverture intermédiaire est conforme en termes de formes et de dimensions avec celles du membre longitudinal.

Selon un mode de réalisation, la plaque de déformation comprend une section centrale plane en appui contre la plaque de blocage, deux sections latérales obliques par rapport à la plaque de déformation et se terminant chacune par une section terminale orientée selon une direction opposée à la direction d'extension du membre longitudinal, chaque section terminale étant en appui contre une ailette latérale.

Selon un mode de réalisation, le connecteur male est retenu par la première cale avec un jeu selon les directions du plan défini par la première face.

L'invention concerne également un dispositif d'assemblage pour l'assemblage de deux modules dits respectivement premier module et deuxième module, le dispositif d'assemblage comprenant :
- une première cale destinée à être solidaire du premier module et pourvue d'une première face, la première cale comprenant des logements, dits premiers logements, débouchant par la première face ;
- un moyen de liaison configuré pour attacher le premier module au deuxième module ;
- une deuxième cale pourvue d'une deuxième face et comprend au moins un pion, dit premier pion, en projection par rapport à la deuxième face, l'au moins un premier pion présentant une taille inférieure à celle des premiers logements ;
- une poche de colle disposée sur le fond des premiers logements, et qui sous l'effet d'un effort d'appui exercé par l'au moins un premier pion, lors du rapprochement de la première face et de la deuxième face, cède et laisse la colle qu'elle renferme se répondre dans le volume délimité par le premier logement afin de sceller la premier pion.

L'invention concerne également un dispositif d'assemblage pour l'assemblage de deux modules dits respectivement premier module et deuxième module, le dispositif d'assemblage comprenant :
- une première cale destinée à être solidaire du premier module et pourvue d'une première face ;
- un moyen de liaison configuré pour attacher le premier module au deuxième module ;
- une deuxième cale pourvue d'une deuxième face ;
- une poche de colle sur l'une ou l'autre de la première face et de la deuxième face et qui sous l'effet d'un effort d'appui exercé lors du rapprochement de la première face et de la deuxième face, cède et laisse la colle qu'elle renferme se répondre à l'interface formée en la première face et la deuxième face.

### BREVE DESCRIPTION DES DESSINS

D'autres caractéristiques et avantages de l'invention ressortiront de la description détaillée qui va suivre en référence aux figures annexées sur lesquelles :
[Fig.1] La figure 1 est une représentation schématique d'un dispositif d'assemblage selon un premier mode de réalisation de la présente invention, notamment, la figure 1 représente le dispositif d'assemblage selon une vue en perspective ;
[Fig.2] La figure 2 est une représentation schématique de la première cale du dispositif d'assemblage de la figure 1, notamment, la figure 2 représente la première cale selon une vue en perspective ;
[Fig.3] La figure 3 est une représentation schématique de la deuxième cale du dispositif d'assemblage de la figure 1, notamment, la figure 3 représente la deuxième cale selon une vue en perspective et par une face principale opposée à la deuxième face ;
[Fig.4] La figure 4 est une représentation schématique de la deuxième cale du dispositif d'assemblage de la figure 1, notamment, la figure 4 représente la deuxième cale selon une vue en perspective et par la deuxième face ;
[Fig.5] La figure 5 est une représentation schématique de la plaque de blocage de la figure 1 et selon une vue en perspective ;
[Fig.6] La figure 6 représente, selon une vue selon un plan de coupe perpendiculaire à la première face, l'engagement de la première cale dans la deuxième cale ;
[Fig.7] La figure 7 représente, selon une vue selon un plan de coupe perpendiculaire à la première face, l'emboîtement de la première cale dans la deuxième cale ;
[Fig.8] La figure 8 est une représentation schématique, en perspective, de la plaque de blocage selon un deuxième mode de réalisation de la présente invention ;
[Fig.9] La figure 9 est une représentation schématique, en perspective, de la première cale selon un deuxième mode de réalisation de la présente invention ;
[Fig.10] La figure 10 est une représentation schématique, en perspective, de la deuxième cale selon un deuxième mode de réalisation de la présente invention ;
[Fig.11] La figure 11 est une représentation schématique d'une deuxième rondelle susceptible d'être mis en œuvre dans un troisième mode de réalisation de la présente invention ;
[Fig.12] La figure 12 est une représentation schématique d'une première rondelle susceptible d'être mis en œuvre dans un troisième mode de réalisation de la présente invention ;
[Fig.13] La figure 13 est une représentation schématique d'une plaque de blocage intercalée entre deux jeux de première et deuxième rondelle ;
[Fig.14] La figure 14 est une représentation schématique de la plaque de blocage selon le troisième mode de réalisation de la présente invention ;
[Fig.15] La figure 15 est une illustration, relative au troisième mode de réalisation, de la plaque de blocage reposant sur la face avant, les deuxièmes pions étant chacun engagés dans une ouverture de blocage ;
[Fig.16] La figure 16 est une illustration du dispositif d'assemblage selon le troisième mode de réalisation et à l'issue de la déformation par emboutissement des zones de prédécoupe afin de figer la plaque de blocage et le connecteur male, cette figure 16 représente notamment le dispositif d'assemblage selon un plan de coupe perpendiculaire à la face avant et passant par le membre longitudinal ;
[Fig.17] La figure 17 est une illustration, relative à un quatrième mode de réalisation, d'une plaque additionnelle formant pour partie le moyen de blocage ;
[Fig.18] La figure 18 est une illustration du dispositif d'assemblage selon le quatrième mode de réalisation et avant la déformation par emboutissement des zones de prédécoupe, notamment la figure 18 représente notamment le dispositif d'assemblage selon un plan de coupe perpendiculaire à la face avant et passant par le membre longitudinal ;
[Fig.19] La figure 19 est une illustration, relative au quatrième mode de réalisation, de la plaque de blocage ;
[Fig.20] La figure 20 est une illustration, relative au quatrième mode de réalisation, de la première cale ;
[Fig.21] La figure 21 est une illustration, relative au cinquième mode de réalisation, de la plaque de blocage ;
[Fig.22] La figure 22 est une illustration, relative au cinquième mode de réalisation, de la première cale ;
[Fig.23] La figure 23 est une illustration, relative au cinquième mode de réalisation, de la plaque de déformation ;
[Fig.24] La figure 24 est une illustration, relative au cinquième mode de réalisation, du dispositif d'assemblage (sans la deuxième cale) avant déformation des ailettes latérales ;
[Fig.25] La figure 25 est une illustration, relative au cinquième mode de réalisation, du dispositif d'assemblage après déformation des ailettes latérales ;
[Fig. 26] La figure 26 est une illustration d'une zone de prédécoupe sur une plaque de déformation selon le sixième mode de réalisation ;
[Fig. 27] La figure 27 est une représentation de la zone de prédécoupe de la figure 26 par le premier pion.
[Fig. 28] La figure 28 est une illustration, relative au septième mode de réalisation, du dispositif d'assemblage étant illustré avant déformation de la zone de prédécoupe et écrasement de la poche de colle ;
[Fig. 29] La figure 29 est une illustration, relative au septième mode de réalisation, du dispositif d'assemblage étant illustré après déformation de la zone de prédécoupe et écrasement de la poche de colle ;
[Fig. 30] La figure 30 est une illustration, relative au huitième mode de réalisation, du dispositif d'assemblage étant illustré avant écrasement de la poche de colle ;
[Fig. 31] La figure 31 est une illustration, relative au huitième mode de réalisation, du dispositif d'assemblage étant illustré après écrasement de la poche de colle.

### DESCRIPTION DETAILLEE DE L'INVENTION

La présente invention concerne un dispositif d'assemblage, et notamment un dispositif d'assemblage susceptible d'être mis en œuvre dans le domaine du bâtiment. Plus particulièrement, la présente invention concerne un dispositif d'assemblage pouvant comprendre un connecteur male et un connecteur femelle dans lequel le connecteur mal est destiné à être engagé selon une direction dite direction d'engagement. Afin de faciliter l'engagement, et notamment l'alignement, du connecteur mal dans le connecteur femelle, ledit connecteur mal peut présenter un jeu latéral autorisant de légers mouvements de translation de ce dernier selon des directions perpendiculaires à la direction d'engagement.

Toutefois, ce jeu latéral, s'il facilite l'assemblage, ne permet pas de considérer un assemblage ferme. Ainsi, la présente invention propose un dispositif d'assemblage pour lequel le jeu latéral est neutralisé à l'issu de l'engagement de connecteur mal dans le connecteur femelle.

Ainsi, la présente invention concerne un dispositif d'assemblage pour l'assemblage de deux modules dits respectivement premier module et deuxième module, le dispositif d'assemblage comprenant :
- un moyen de liaison configuré pour attacher le premier module au deuxième module
- une première cale destinée à être solidaire du premier module et pourvue d'une première face;
- une deuxième cale pourvue d'une deuxième face ;
- un moyen de blocage destiné à être intercalé entre la première face et la deuxième face, et qui sous l'effet d'un effort d'appui exercé par l'une de la première face et de la deuxième face vers l'autre de la première face et de la deuxième face, se déforme de manière à empêcher tout mouvement du moyen de liaison et de la deuxième cale selon les directions d'un plan défini par la première face.

Selon la présente invention, un module peuvent prendre n'importe qu'elle forme, et n'est notamment pas limité à un parallélépipède rectangle. Notamment, un module peut représenter un objet à 3 dimensions, un objet à 2 dimensions ou encore un objet à 1 dimension.

De manière avantageuse, le moyen de liaison comprend un connecteur male et un connecteur femelle, le connecteur male étant pourvu d'une base et d'un membre longitudinal qui s'étend selon une direction d'élongation à partir de la base, et le connecteur femelle étant destiné à coopérer avec le membre longitudinal.

De manière avantageuse, la première cale retient le connecteur male par sa base, la première cale comprenant une première ouverture débouchant par une première face de la première cale, le membre longitudinal traversant la première ouverture, de manière à être en projection par rapport à la première face, la deuxième cale comprenant une deuxième ouverture débouchant par une deuxième face, et par laquelle le membre longitudinal est destiné à être engagé dans le connecteur femelle.

Le dispositif d'assemblage est avantageusement mis en œuvre pour l'assemblage, par exemple par superposition ou par juxtaposition, de modules de masse importante et nécessitant d'être ancrés les uns aux autres au moyen d'une pluralité de dispositifs d'assemblage.

A titre d'exemple, et sans que cela limite la portée de la présente invention à ce seul aspect, les modules peuvent comprendre des modules élémentaires constitutifs d'un bâtiment.

Typiquement, ces modules élémentaires peuvent tous présenter la même forme générale, par exemple un parallélépipède rectangle.

Selon la présente invention, le membre longitudinal peut présenter une section transversale de forme rectangulaire, carrée, triangulaire, circulaire.

Par « section transversale », on entend une vue selon un plan de coupe perpendiculaire à la direction d'élongation dudit membre longitudinal.

Par ailleurs, il est entendu que l'engagement du connecteur male dans le connecteur femelle se termine par la solidarisation de ces derniers selon une liaison fixe. La liaison fixe peut notamment faire intervenir un moyen d'encliquetage. Néanmoins, ce dernier aspect n'est pas de nature à bâer la portée de la présente invention.

Ainsi, et de manière avantageuse, le connecteur male est retenu par la première cale avec un jeu selon les directions du plan défini par la première face. Tel que considéré dans la présente invention, un jeu autorise de légers déplacements du connecteur male selon des directions perpendiculaires à la direction d'engagement du membre longitudinal dans le connecteur femelle. Ces légers déplacements peuvent être de l'ordre de quelques millimètres, voire de l'ordre du centimètre, voire inférieurs à 1,5 centimètre, avantageusement inférieurs à 1 centimètre, encore plus avantageusement inférieurs à 8 millimètres.

Afin de compenser, et plus particulièrement de neutraliser le jeu à l'issu de l'engagement du connecteur male dans le connecteur femelle, le dispositif d'assemblage peut comprendre un moyen de blocage. Ce moyen de blocage est notamment configuré pour, lorsqu'il est déformé et serré entre la première face et la deuxième face, empêcher tout mouvement du connecteur male (plus particulièrement du membre longitudinal) selon les directions du plan perpendiculaires à la direction d'engagement. Le connecteur male se trouve donc figé dans une position de blocage.

Notamment, et selon un mode de réalisation particulièrement avantageux, le moyen de blocage comprend une plaque, dite plaque de blocage, pourvue d'une ouverture, dite ouverture intermédiaire, destinée à être traversée par le membre longitudinal.

Selon un premier mode de réalisation, la première cale et la deuxième cale peuvent être configurées pour coopérer l'une avec l'autre par emboîtement, et de sorte la déformation du moyen de blocage résulte dudit emboîtement. Notamment, la deuxième cale, de forme généralement parallélépipédique rectangle, comprend quatre parois latérales entre lesquelles la première cale est destinée à être emboîtée.

Toujours selon ce premier mode de réalisation, la plaque de blocage peut comprendre des pattes latérales configurées pour être repliées contre les faces latérales de la première cale lors de l'emboîtement de la première cale dans la deuxième cale par coopération avec les parois latérales de la deuxième cale.

Toujours selon ce premier mode de réalisation, l'ouverture intermédiaire peut être dimensionnée pour être traversée sans jeu par le membre longitudinal.

Selon un deuxième mode de réalisation, la plaque de blocage comprend au moins deux zones de prédécoupe, chaque zone de prédécoupe comprend des entailles traversantes configurées pour permettre une déformation de ladite zone de découpe par poinçonnage, la première cale comprend des logements, dits premiers logements, débouchant par la première face et, par exemple de forme cylindrique, chaque premier logement étant destiné à être en correspondance avec une zone de prédécoupe, avantageusement, les entailles traversantes forment une croix.

De manière avantageuse, ledit dispositif d'assemblage peut comprendre des poinçons configurés pour déformer les zones de prédécoupe. Notamment, selon ce deuxième mode de réalisation, chaque poinçon peut comprendre un pion, dit premier pion, porté par la deuxième cale et en projection par rapport à la deuxième face, chaque premier pion présentant une taille inférieure à celle des premiers logements.

Par « premier pion présentant une taille inférieure à celle des premiers logements », on entend un pion qui lorsqu'il est logé dans ledit premier logement peut être déplacé latéralement. A titre d'exemple, un premier logement peut être cylindrique, et chaque premier pion peut présenter un diamètre inférieur à celui des premiers logements.

Selon la présente invention, une zone de prédécoupe comprend des entailles traversantes formée dans la plaque de blocage. Notamment, ces entailles traversantes forment ainsi des zones dont la déformation est facilitée et contrôlée dès lors qu'elles sont soumises à un effort de déformation. En particulier, les entailles traversantes formant une zone de prédécoupe peuvent être agencées pour créer des zones susceptibles de se déformer par pliage. A cette fin, un agencement des entailles traversantes en forme de croix peut avantageusement être considéré.

La déformation des zones de prédécoupes permet de figer le connecteur male. Plus particulièrement, les zones de prédécoupes sont configurées pour s'enfoncer, lors de leur poinçonnage, dans les premiers logements. Cet enfoncement associé à un maintien ferme, par pressage, de la plaque de blocage entre l'une et l'autre de la première face et de la deuxième face fige ainsi la plaque de blocage dans une position de blocage empêchant tout mouvement du connecteur male.

Selon un troisième mode de réalisation, la plaque de blocage comprend au moins deux zones de prédécoupe, chaque zone de prédécoupe comprend des entailles traversantes configurées pour permettre une déformation de ladite zone de prédécoupe par poinçonnage, la première cale comprend des logements, dits premiers logements, débouchant par la première face (par exemple de forme cylindrique), chaque premier logement étant destiné à être en correspondance avec une zone de prédécoupe, avantageusement, les entailles traversantes forment une croix.

De manière avantageuse, ledit dispositif d'assemblage peut comprendre des poinçons configurés pour déformer les zones de prédécoupe.

Plus particulièrement, chaque poinçon peut comprendre une première rondelle et une deuxième rondelle entre lesquelles la plaque de blocage est destinée à être intercalée, chaque première rondelle est logée dans un premier logement, l'une ou l'autre de la première rondelle et de la deuxième rondelle est surmontée d'un pion, dit deuxième pion, destiné à traverser une ouverture traversante, dite ouverture de blocage, centrée sur la zone de prédécoupe de la plaque de blocage, l'ouverture de blocage présentant un diamètre supérieur à celui du deuxième pion, l'autre de la première rondelle et de la deuxième rondelle comprend une ouverture dans laquelle le deuxième pion est destiné à être guidé, chaque deuxième rondelle est d'une taille inférieure à celle des premiers logements de manière à permettre la déformation des zones de prédécoupe dès lors que lesdites deuxièmes rondelles sont en appui contre lesdites zones de prédécoupe.

Enfin, et selon ce troisième mode de réalisation, l'ouverture intermédiaire est conforme en termes de formes et de dimensions avec celles du membre longitudinal tandis que chaque première rondelle présente un diamètre égal à celui du premier logement dans lequel elle est logée. De manière plus générale, l'ouverture intermédiaire considérée peut être dimensionnée pour que le passage du membre longitudinal à travers ladite ouverture intermédiaire soit sans jeu.

De manière équivalente au deuxième mode de réalisation, les zones de prédécoupe, à l'issue de leur déformation figent la plaque de blocage dans une position de blocage empêchant tout mouvement du connecteur male.

Selon un quatrième mode de réalisation, la plaque de blocage comprend au moins deux zones de prédécoupe, chaque zone de prédécoupe comprend des entailles traversantes configurées pour permettre une déformation de ladite zone de découpe par poinçonnage, la première cale comprend des logements, dits premiers logements, débouchant par la première face et de forme cylindrique, chaque premier logement étant destiné à être en correspondance avec une zone de prédécoupe, avantageusement, les entailles traversantes forment une croix.

De manière avantageuse, ledit dispositif d'assemblage peut comprendre des poinçons configurés pour déformer les zones de prédécoupe.

Plus particulièrement, chaque poinçon peut comprendre une première rondelle et une deuxième rondelle entre lesquelles la plaque de blocage est destinée à être intercalée, chaque première rondelle est logée dans un premier logement, l'une ou l'autre de la première rondelle et de la deuxième rondelle est surmontée d'un pion, dit deuxième pion, destiné à traverser une ouverture traversante, dite ouverture de blocage, centrée sur la zone de prédécoupe de la plaque de blocage, l'ouverture de blocage présentant un diamètre supérieur à celui du deuxième pion, l'autre de la première rondelle et de la deuxième rondelle comprend une ouverture dans laquelle le deuxième pion est destiné à être guidé, chaque deuxième rondelle est d'une taille inférieure à celle des premiers logements de manière à permettre la déformation des zones de prédécoupe dès lors que lesdites deuxièmes rondelles sont en appui contre lesdites zones de prédécoupe.

Enfin, selon ce quatrième mode de réalisation, le moyen de blocage peut comprendre une plaque additionnelle portant les deuxièmes rondelles et intercalée entre la deuxième cale et la plaque de blocage, la plaque additionnelle comprend une ouverture, dite ouverture additionnelle, destinée à être traversée par le membre longitudinal, ladite ouverture additionnelle est configurée pour être traversée sans jeu par le membre longitudinal, avantageusement l'ouverture additionnelle est conforme en termes de formes et de dimensions du membre longitudinal, l'ouverture intermédiaire présente des dimensions supérieures à celle du membre longitudinal, chaque première rondelle est montée avec un jeu dans le premier logement dans lequel elle est logée.

A titre d'exemple, l'ouverture additionnelle peut être conforme en termes de formes et de dimensions au membre longitudinal, tandis que l'ouverture intermédiaire présente des dimensions supérieures à celle du membre longitudinal

Selon un cinquième mode de réalisation, le moyen de blocage comprend également, intercalé entre la deuxième cale et la plaque de blocage, une plaque de déformation, la plaque de blocage comprend deux ailettes latérales et configurées pour se replier contre deux faces latérales, dites faces de blocage et opposées l'une de l'autre, de la première cale, la plaque de déformation étant configurée pour provoquer le pliage des ailettes latérales contre les faces de blocage dès lors que la deuxième cale presse ladite plaque de déformation contre la plaque de blocage. Notamment, l'ouverture intermédiaire est conforme en termes de formes et de dimensions au membre longitudinal. Selon ce cinquième mode de réalisation, la plaque de déformation comprend une section centrale plane en appui contre la plaque de blocage, deux sections latérales obliques par rapport à la plaque de déformation et se terminant chacune par une section terminale orientée selon une direction opposée à la direction d'extension du membre longitudinal, chaque section terminale étant en appui contre une ailette latérale.

Selon un sixième mode de réalisation, le moyen de blocage comprend une plaque de blocage. La plaque de blocage comprend au moins deux zones de prédécoupe, chaque zone de prédécoupe comprend des entailles traversantes configurées pour permettre une déformation de ladite zone de prédécoupe par poinçonnage, la première cale comprend des logements, dits premiers logements, débouchant par la première face, avantageusement de forme cylindrique, chaque premier logement étant destiné à être en correspondance avec une zone de prédécoupe, avantageusement, les entailles traversantes forment une croix. Ledit dispositif d'assemblage comprend des poinçons configurés pour déformer les zones de prédécoupe. Chaque poinçon comprend un pion, dit premier pion, porté par la deuxième cale et en projection par rapport à la deuxième face, chaque premier pion présentant une taille inférieure à celle des premiers logements. Chaque premier pion, de forme comprend une gorge, dite première gorge, et chaque premier logement comprend une rainure circonférentielle, dite première rainure, les entailles traversantes délimitant des sections de la zone de prédécoupe, dites premières sections, le moyen de liaison comprenant la première rainure, la première gorge et les premières sections, les premières sections étant conformées pour, à la suite du poinçonnage, coopérer avec la première gorge et le premier logement de manière à attacher le premier module au deuxième module. Chaque première section forme un triangle orienté vers le centre de la zone de déformation, ledit triangle comprenant un coin terminal et deux coins latéraux, les deux coins latéraux étant configurés pour être au moins en partie logés dans la première rainure à l'issue de leur déformation par poinçonnage, et le coin terminal étant configuré pour être au moins en partie logé dans la première gorge à l'issue de sa déformation par poinçonnage.

La suite de l'énoncé propose une description de chacun des modes de réalisation et selon des configurations particulières.

### Premier mode de réalisation

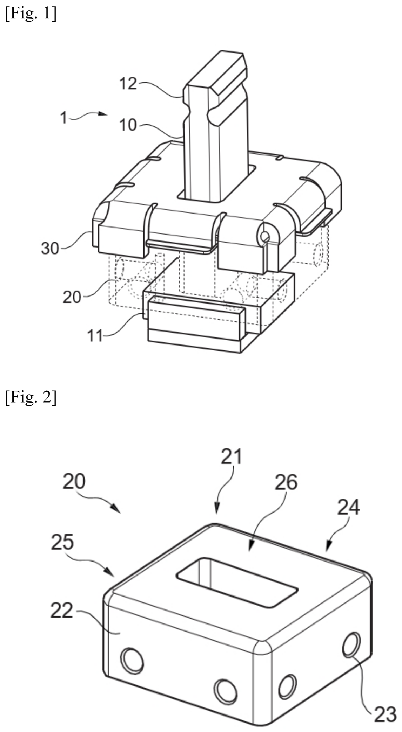

A la figure 1, on peut voir un dispositif d'assemblage 1 conforme au premier mode de réalisation de la présente invention.

Le dispositif d'assemblage 1 comprend un connecteur male 10. Notamment, le connecteur male 10 comprend une base 11, par exemple une base 11 de forme parallélépipédique rectangle, et un membre longitudinal 12 qui s'étend selon une direction d'élongation à partir de la base 11.

Le dispositif d'assemblage 1 comprend également un connecteur femelle (non représenté) et destiné à coopérer avec le membre longitudinal 12. Notamment, la coopération entre le connecteur male 10 et le connecteur femelle fait dans un premier temps intervenir un engagement du connecteur mal dans le connecteur femelle, puis, dans un second temps, un verrouillage en liaison fixe du membre longitudinal dans le connecteur femelle. Le verrouillage peut comprendre un encliquetage. Néanmoins, cet aspect n'est donné qu'à titre d'exemple et n'a pas vocation à limiter la portée de la présente invention.

Le dispositif d'assemblage 1 comprend également une première cale 20 (figure 2) destinée à être solidaire d'un premier module.

La première cale 20 représentée à la figure 2 est notamment de forme parallélépipédique rectangle. Plus particulièrement, la première cale peut comprendre deux faces principales parallèles entres elles et parmi lesquelles l'une est nommée première face 21. Les deux faces principales sont par ailleurs reliées par des faces latérales 22, 23, 24 et 25. A titre d'exemple, les faces latérales peuvent être perpendiculaires deux à deux. En d'autres termes, l'intersection d'un plan, parallèle à la première face, avec les faces latérales peut former un rectangle voire un carré.

La première cale 20 comprend également une ouverture traversante, dite première ouverture 26, débouchant par l'une et l'autre des deux faces principales.

Par ailleurs, la première cale 20 est configurée pour retenir le connecteur male 10 par sa base 11 et de sorte que le membre longitudinal 12 traverse la première ouverture 26 de manière à être en projection par rapport à la première face. Plus particulièrement, le connecteur male 10 est retenu par la première cale 20 par sa base 11, ladite base 11 étant en appui contre une face principale de la première cale 20 et opposée à la première face 26.

A cet égard, le connecteur male 10 peut être retenu par la première cale 20 avec un jeu selon les directions du plan défini par la première face 26.

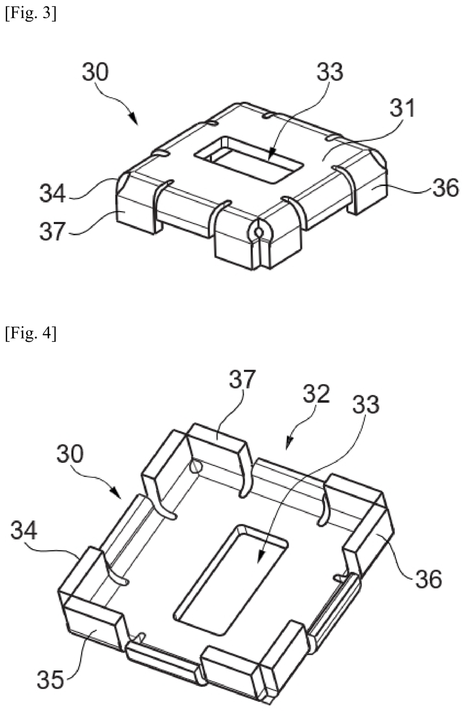

Le dispositif d'assemblage 1 comprend également une deuxième cale 30 (figure 3 et figure 4). La deuxième cale 30 comprend une plaque 31 délimitée par deux faces principales parallèles entre elles, et parmi lesquelles l'une est nommée deuxième face 32. La deuxième cale 30 comprend une deuxième ouverture 33 traversant de part en part la plaque 31. Notamment, la deuxième ouverture 33 est configurée pour permettre l'engagement du membre longitudinal 12, par la deuxième face 31, dans le connecteur femelle.

Selon ce premier mode de réalisation, la première cale 20 et la deuxième cale 30 sont configurées pour coopérer l'une avec l'autre par emboîtement. Notamment, la deuxième cale peut être configurée pour permettre l'emboitement de la première cale 20 dans la deuxième cale 30. Il est entendu qu'un emboitement de la deuxième cale 30 dans la première cale 20 peut également être envisagé.

Ainsi, et à titre d'exemple, la deuxième cale peut être de forme généralement parallélépipédique rectangle, et comprend quatre parois latérales 34, 35, 36 et 37 entre lesquelles la première cale 20 est destinée à être emboîtée. Chacune des parois latérales 34, 35, 36 et 37 s'étend donc d'un bord de la plaque 31 vers un bord libre.

Le dispositif d'assemblage 1 comprend également un moyen de blocage destiné à être intercalé entre la première face 21 et la deuxième face 32, et qui sous l'effet d'un effort d'appui exercé par l'une de la première face 21 et de la deuxième face 32 vers l'autre de la première face 21 et de la deuxième face 32, se déforme de manière à empêcher tout mouvement du membre longitudinal selon les directions d'un plan défini par la première face.

A titre d'exemple, l'effort d'appui peut être exercé par le poids de l'un ou l'autre du premier module et du deuxième module. Notamment, un deuxième module pourvu de la deuxième cale peut être disposé à l'aplomb d'un premier module pourvu de la première cale, et de sorte que la première face soit en vis-à-vis de la deuxième face. Lors de son rapprochement vers le premier module, le deuxième module, et notamment la deuxième cale vient exercer un effort de déformation sur le moyen de blocage.

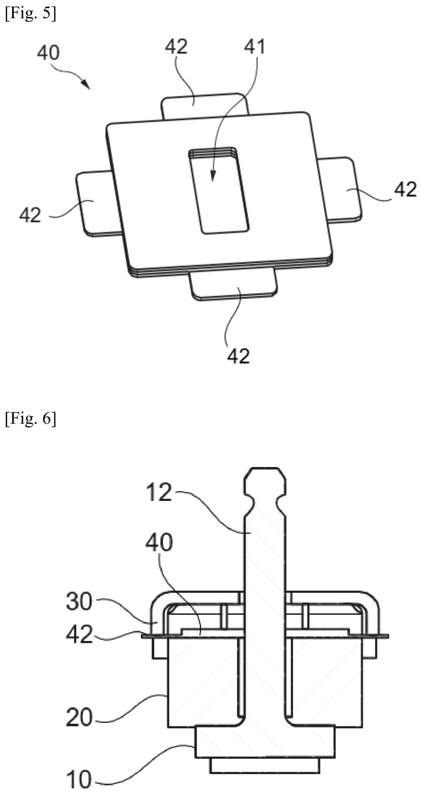

Selon le premier mode de réalisation, le moyen de blocage comprend une plaque, dite plaque de blocage 40 (figure 5), pourvue d'une ouverture, dite ouverture intermédiaire 41, destinée à être traversée par le membre longitudinal 12. Notamment, l'ouverture intermédiaire 41 peut être dimensionnée pour être traversée sans jeu par le membre longitudinal. En particulier, l'ouverture 41 peut présenter la même forme et les mêmes dimensions que la section du membre longitudinal 12.

Selon ce premier mode de réalisation, la plaque de blocage 40 peut comprendre des pattes latérales 42 configurées pour être repliées contre les faces latérales 22, 23, 24 et 25 de la première cale 20 lors de l'emboîtement de la première cale 20 dans la deuxième cale 30 par coopération avec les parois latérales 34, 35, 36 et 37 de la deuxième cale 30.

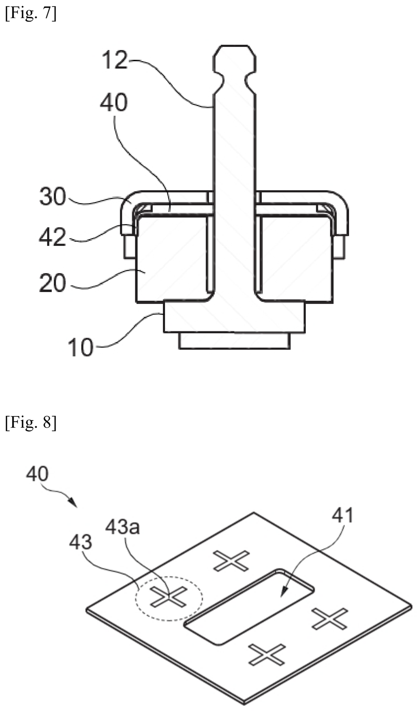

A cet égard, la figure 6 est une illustration du dispositif d'assemblage 1 avant emboîtement complet de la première cale 20 dans la deuxième cale 30. Sur cette figure 6, on peut constater que les pattes latérales 42 restent dans le plan de la plaque de blocage 40. A la figure 7, on peut observer un emboitement complet de la première cale dans la deuxième cale qui conduit à une immobilisation de la plaque de blocage 40. En effet, cette dernière se trouve immobilisée entre la première cale et la deuxième cale, avec les pattes latérales 42 repliées contre les faces latérales 22, 23, 24 et 25 de la première cale 20. Notamment, au cours de l'emboîtement, chaque bord libre des parois latérales 34, 35, 36 et 37 exerce un effort sur les pattes latérales qui se retrouvent ainsi chacun rabattue contre une face latérale 22, 23, 24 et 25.

Aussi, et tel qu'illustré à la figure 3, chaque bord libre d'une paroi latérale 34, 35, 36 et 37 peut comprendre une encoche 36a, 37a, en retrait, et épousant la patte latérale 42. Ce dernier aspect permet notamment de procéder à un pré engagement de la première cale dans la deuxième cale avant de plier lesdites pattes latérales 42.

Dans la mesure où le membre longitudinal traverse l'ouverture intermédiaire sans jeu latéral, l'immobilisation de la plaque de blocage conduit à l'immobilisation dudit membre longitudinal.

### Deuxième mode de réalisation

La présente invention couvre également un deuxième mode de réalisation qui reprend pour l'essentiel les caractéristiques du premier mode de réalisation.

Néanmoins, ce deuxième mode de réalisation diffère du premier mode de réalisation en ce que la plaque de blocage et dépourvue de pattes latérales mais comprend au moins deux zones de prédécoupe.

Plus particulièrement, et tel qu'illustré à la figure 8, une zone de prédécoupe 43 comprend des entailles 43a traversantes formées dans la plaque de blocage. Notamment, ces entailles 43a traversantes forment ainsi des zones dont la déformation est facilitée et contrôlée dès lors qu'elles sont soumises à un effort de déformation. En particulier, les entailles 43a traversantes formant une zone de prédécoupe peuvent être agencées pour créer des zones susceptibles de se déformer par pliage. A cette fin, un agencement des entailles traversantes en forme de croix peut avantageusement être considéré.

Notamment, les entailles 43a traversantes peuvent être configurées pour permettre une déformation de la zone de découpe par poinçonnage.

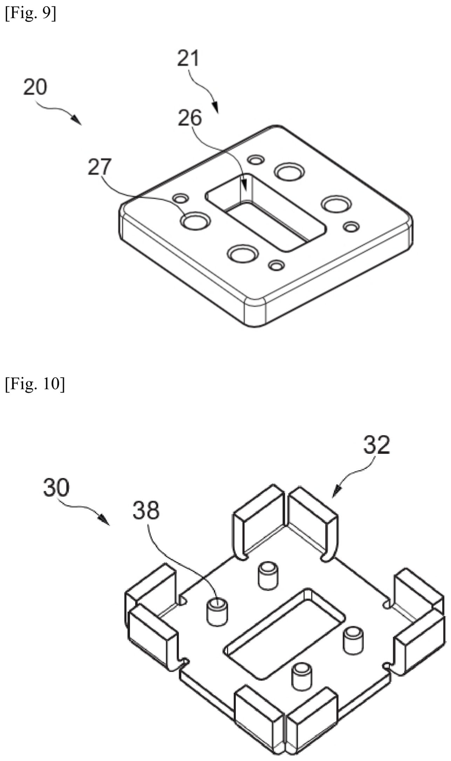

Toujours selon ce deuxième mode de réalisation, la première cale 20 (figure 9) comprend des logements, dits premiers logements 27, débouchant par la première face 21 et de forme cylindrique, chaque premier logement étant destiné à être en correspondance avec une zone de prédécoupe 43.

Le dispositif d'assemblage 1 comprend également des poinçons configurés pour déformer les zones de prédécoupe.

Notamment, et tel qu'illustré à la figure 10, chaque poinçon comprend un pion, dit premier pion 38, porté par la deuxième cale 30 et en projection par rapport à la deuxième face, chaque premier pion 38 présentant un diamètre inférieur à celui des premiers logements 27.

En fonctionnement, le dispositif d'assemblage 1 selon ce deuxième mode de réalisation permet une déformation/pliage des zones de prédécoupe dans les premiers logements 27 par action des premiers pions 38.

De cette déformation résulte une immobilisation de la plaque de blocage et du connecteur male.

### Troisième mode de réalisation

La présente invention couvre également un troisième mode de réalisation qui reprend pour l'essentiel les caractéristiques du deuxième mode de réalisation.

Selon ce troisième mode de réalisation, la deuxième cale 30 peut être dépourvue de parois latérales.

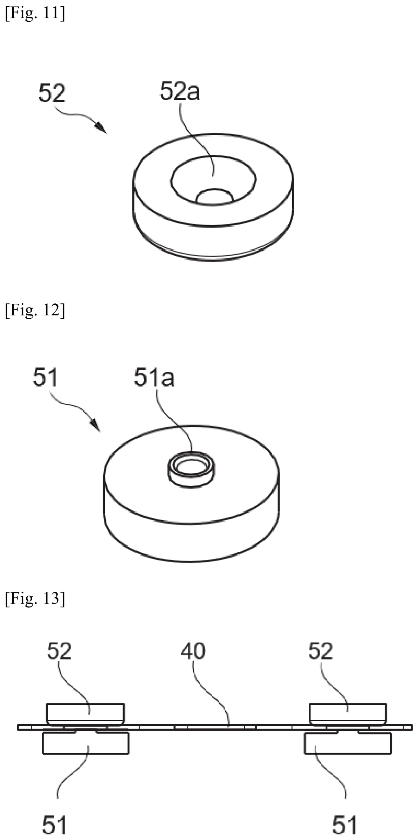

Tel qu'illustré à la figure 11, chaque poinçon comprend une première rondelle 51 (figure 12) et une deuxième rondelle 52 (figure 11) entre lesquelles la plaque de blocage (figure 13) est destinée à être intercalée.

Chaque première rondelle 51, logée dans un premier logement, est surmontée d'un pion 51a, dit deuxième pion 51a, destiné à traverser une ouverture traversante, dite ouverture de blocage 43b, centrée sur la zone de prédécoupe 43 de la plaque de blocage 40. L'ouverture de blocage 43b présente en particulier un diamètre supérieur à celui du deuxième pion 51a. Cet aspect permet notamment un ajustement de positionnement de la plaque de blocage avant déformation des zones de prédécoupe 43.

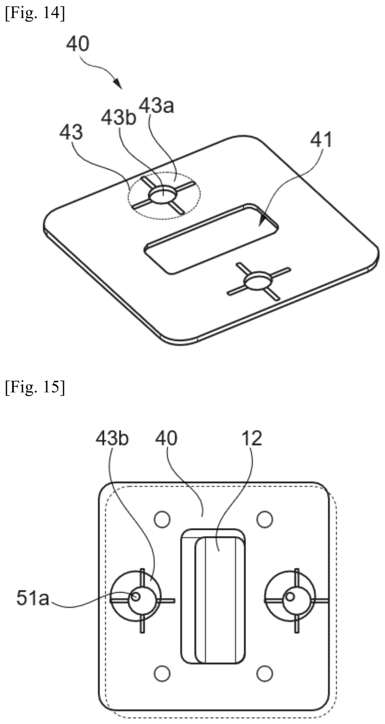

A cet égard, la figure 15 est une illustration de la plaque de blocage 40 reposant sur la face avant 21, les deuxièmes pions 51a étant chacun engagés dans une ouverture de blocage 43b.

Toujours selon le troisième mode de réalisation, la deuxième rondelle 52 comprend une ouverture 52a dans laquelle le deuxième pion est destiné à être guidé, chaque deuxième rondelle 52 est d'un diamètre inférieur à celui des premiers logements 27 de manière à permettre la déformation des zones de prédécoupe 43 dès lors que lesdites deuxièmes rondelles 52 sont en appui contre lesdites zones de prédécoupe 43.

Selon ce troisième mode de réalisation, l'ouverture intermédiaire 41 est conforme en termes de formes et de dimensions avec celles du membre longitudinal 12 tandis que chaque première rondelle 51 présente un diamètre égal à celui du premier logement 27 dans lequel elle est logée.

De manière équivalente au deuxième mode de réalisation, les zones de prédécoupe, à l'issue de leur déformation figent la plaque de blocage dans une position de blocage empêchant tout mouvement du connecteur male.

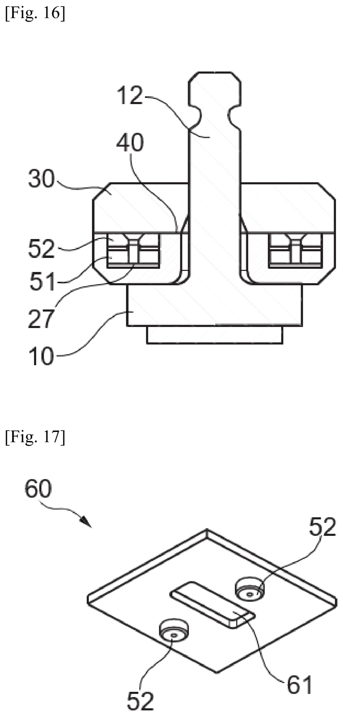

Notamment, et tel qu'illustré à la figure 16, la déformation des zones de prédécoupe 43 par les deuxièmes rondelles 52 conduisent à un pliage/emboutissement desdites zones de prédécoupes 43 dans les premier logements 27.

### Quatrième mode de réalisation

La présente invention couvre également un quatrième mode de réalisation qui reprend pour l'essentiel les caractéristiques du troisième mode de réalisation.

Toutefois, selon ce quatrième mode de réalisation, les premières rondelles 51 sont d'un diamètre inférieur au diamètre des premiers logements 27. Par ailleurs, l'ouverture intermédiaire 41 de la plaque de blocage 40 permet un passage du membre longitudinal 12 avec un jeu.

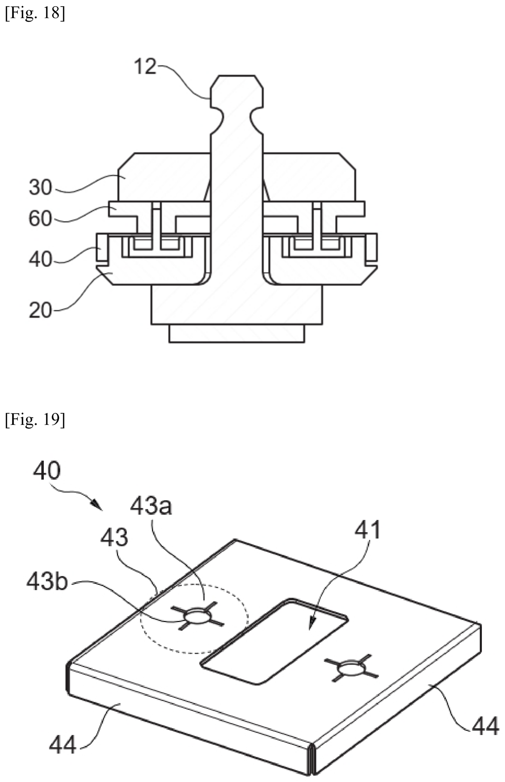

Selon ce quatrième mode de réalisation, le moyen de blocage comprend une plaque additionnelle 60 (figure 17) portant les deuxièmes rondelles 52 sur l'une de ses faces. Notamment, et tel qu'illustré à la figure 18, la plaque additionnelle est configurée pour être intercalée entre la deuxième cale 30 et la plaque de blocage 40.

La plaque additionnelle 60 comprend une ouverture, dite ouverture additionnelle 61, destinée à être traversée sans jeu par le membre longitudinal 12. Notamment, ladite ouverture additionnelle 61 peut être conforme en termes de formes et de dimensions du membre longitudinal 12, tandis que l'ouverture intermédiaire 26 présente des dimensions supérieures à celle du membre longitudinal, chaque première rondelle 51 étant, en outre d'un diamètre inférieur à celui du premier logement dans lequel elle est logée.

Selon ce quatrième mode de réalisation, la déformation des zones de prédécoupe par un effort exercé par la plaque additionnelle 52 vient figer cette dernière et par voie de conséquence immobiliser également le membre longitudinal 12.

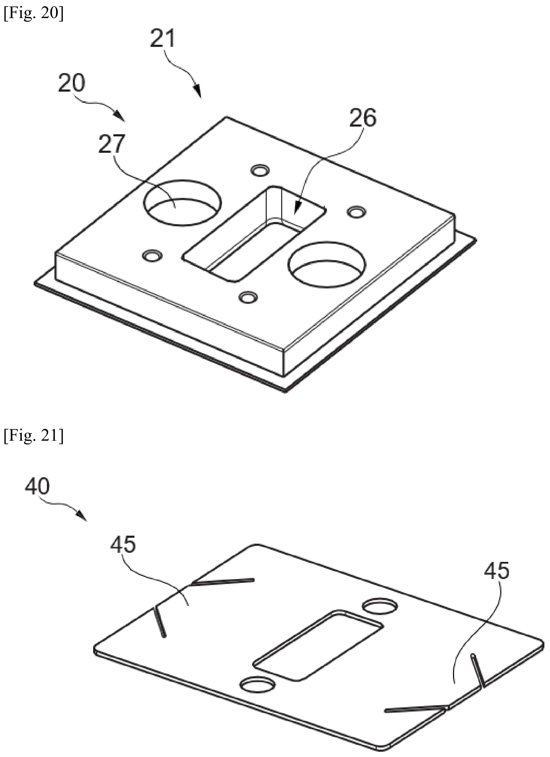

La plaque de blocage 40 (figure 20) peut également comprendre des parois latérales 44 configurées pour permettre l'emboitement de la première plaque 20 entre lesdites parois latérales 44.

### Cinquième mode de réalisation

La présente invention couvre également un cinquième mode de réalisation qui reprend pour l'essentiel les caractéristiques du premier mode de réalisation.

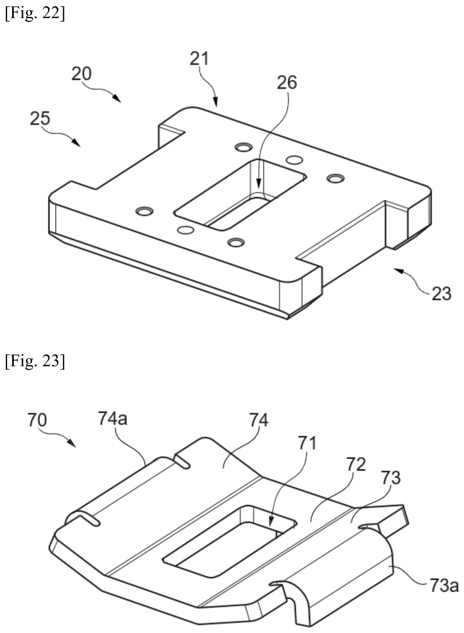

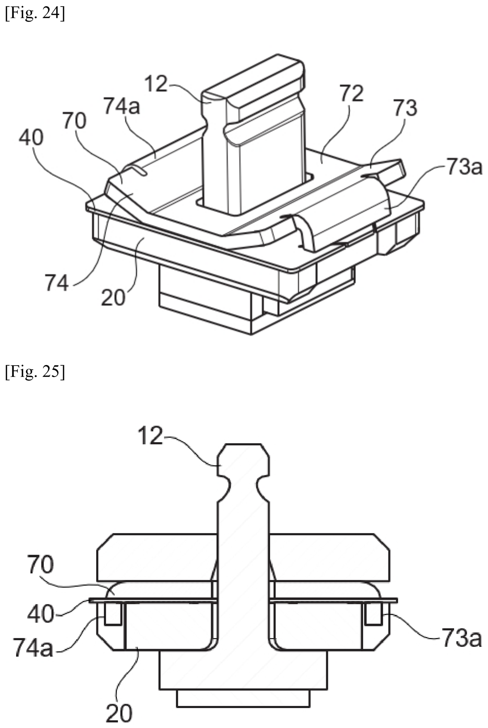

Selon ce cinquième mode de réalisation, la deuxième cale 30 (figure 25) peut être dépourvue de parois latérales. La plaque de blocage 40 (figure 21) comprend deux ailettes latérales 45 configurées pour se replier contre deux faces latérales 23 et 25, dites faces de blocage et opposées l'une de l'autre, de la première cale 20. Notamment, chaque face de blocage 23 et 25 (figure 22) peut comprendre une encoche 23a et 25a dans laquelle l'une et l'autre des ailettes latérales 45 est destinée à venir se replier.

Le moyen de blocage comprend également, intercalé entre la deuxième cale 30 et la plaque de blocage 40, une plaque de déformation 70 (figure 23). La plaque de déformation est notamment configurée pour provoquer le pliage des ailettes latérales contre les faces de blocage dès lors que la deuxième cale presse ladite plaque de déformation contre la plaque de blocage.

L'ouverture intermédiaire est conforme en termes de formes et de dimensions avec celles du membre longitudinal.

Selon le cinquième mode de réalisation, la plaque de déformation 70 comprend une ouverture centrale 71 traversante portée par une section centrale 72 plane en appui contre la plaque de blocage 40 (figure 23, figure 24 et figure 25), deux sections latérales 73 et 74 obliques par rapport à la plaque de déformation et se terminant chacune par une section terminale 73a et 74a orientée selon une direction opposée à la direction d'extension du membre longitudinal 12, chaque section terminale étant en appui contre une ailette latérale. Aussi, dès lors qu'un effort destiné à aplatir la plaque de déformation par action de la deuxième cale, chacune des sections latérales 73a et 74a vient plier les ailettes latérales dans les encoches 23a et 25a. A l'issue de cette déformation, la plaque de blocage 40 est figée. Aussi, dans la mesure où l'ouverture intermédiaire de la plaque de blocage est conforme en termes de formes et de dimensions avec celles du membre longitudinal, ce dernier se trouve également figé.

### Sixième mode de réalisation

La présente invention couvre également un sixième mode de réalisation qui reprend pour l'essentiel les caractéristiques du deuxième mode de réalisation.

Ce sixième mode de réalisation diffère du deuxième mode de réalisation par son moyen de liaison.

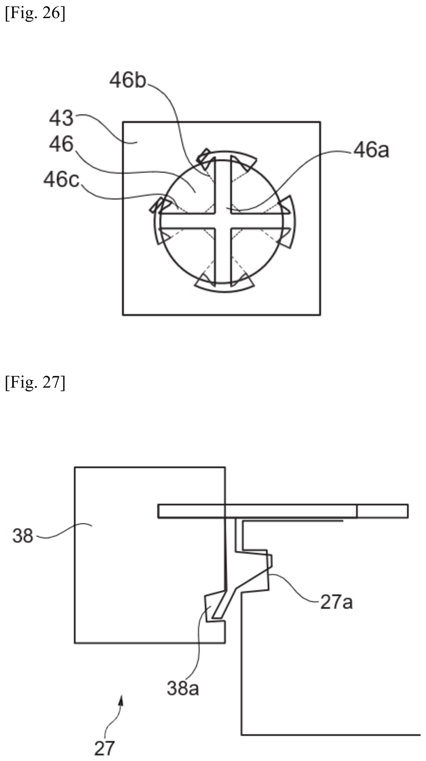

La figure 26 est une illustration d'une zone de prédécoupe 43 sur une plaque de déformation, tandis que la figure 27 est une représentation de la zone de prédécoupe par le premier pion 38.

Selon ce sixième mode de réalisation, chaque premier pion 38, de forme comprend une gorge, dite première gorge 38a.

Chaque premier logement 27 comprend une rainure circonférentielle 27a, dite première rainure 27a.

Les entailles traversantes délimitent des sections de la zone de prédécoupe 43, dites premières sections 46 conformées pour, à la suite du poinçonnage, coopérer avec la première gorge et le premier logement de manière à attacher le premier module au deuxième module.

Selon ce sixième mode de réalisation, le moyen de liaison comprend la première rainure 27a, la première gorge 38a et les premières sections 46.

De manière particulièrement avantageuse, chaque première section 46 forme un triangle orienté vers le centre de la zone de déformation, ledit triangle comprenant un coin terminal 46a (orienté vers le centre de la zone de prédécoupe) et deux coins latéraux 46b et 46c, les deux coins latéraux 46b et 46c étant configurés pour être au moins en partie logés dans la première rainure 27a à l'issue de leur déformation par poinçonnage, et le coin terminal 46a étant configuré pour être au moins en partie logé dans la première gorge 38a à l'issue de sa déformation par poinçonnage (figure 27).

Ainsi, lors du poinçonnage, le premier pion 38 déforme chacune des premières section 46 et les plie intérieurement au premier logement 27. A l'issue de cette déformation, le coin terminal 46a vient en butée dans la première gorge 38a tandis que les coins latéraux viennent en butée dans la première rainure 27a, empêchant ainsi tout retrait du premier pion. La première cale et la deuxième cale se trouvent ainsi solidarisées l'une de l'autres. La plaque de blocage 40 est pour sa part figée et donc privée de tout selon les directions d'un plan défini par la première face.

### Septième mode de réalisation

La présente invention couvre également un septième mode de réalisation qui reprend pour l'essentiel les caractéristiques du troisième mode de réalisation.

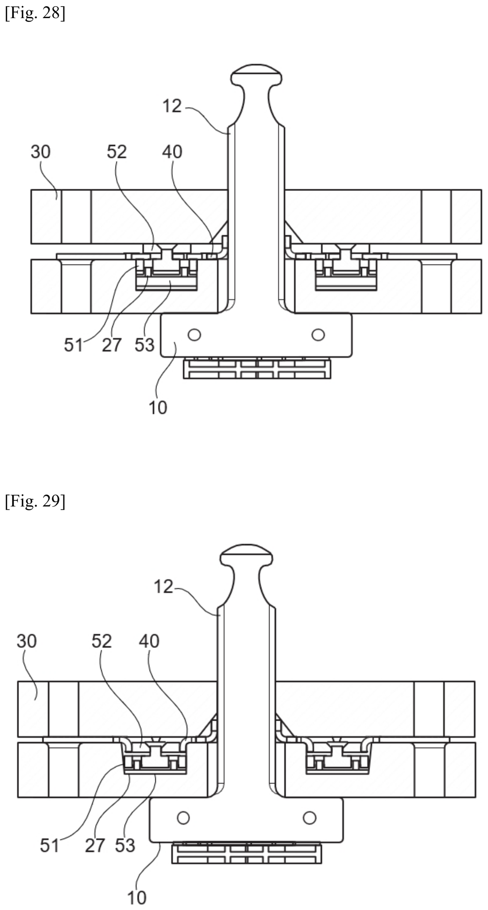

Ce septième mode de réalisation met en œuvre une poche de colle est disposée entre le fond du premier logement 27 et la première rondelle 51 (figure 28). En fonctionnement, lors de la déformation des zones de prédécoupe, un effort est également exercé sur la poche de colle 53 qui cède et laisse la colle qu'elle contient se répandre dans tout le volume du premier logement ainsi sceller la zone de prédécoupe déformée (figure 29).

### Huitième mode de réalisation

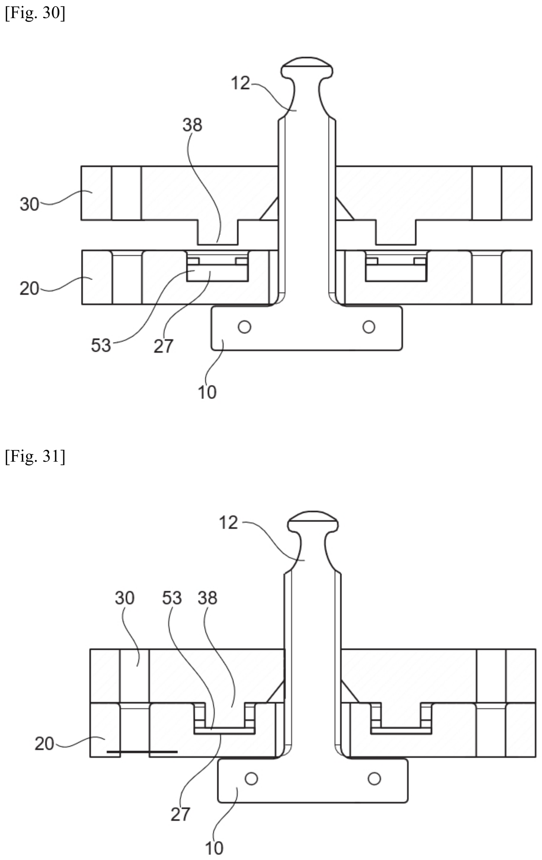

La présente invention couvre également un huitième mode de réalisation qui reprend pour l'essentiel les caractéristiques du septième mode de réalisation. Toutefois, dans ce mode de réalisation, le dispositif d'assemblage est dépourvu de plaque de blocage et de moyen de blocage (figure 30).

Le dispositif d'assemblage est également dépourvue de la première rondelle et de la deuxième rondelle. Ces dernières sont remplacées par le pion 38 (également considéré dans le deuxième mode de réalisation). A l'instar du septième mode de réalisation, le dispositif d'assemblage comprend un poche de colle 53 disposée au fond du premier logement 27.

En fonctionnement, lors du rapprochement de la première cale 20 et de la deuxième cale 30, le premier pion écrase la poche de colle. A la suite de cet écrasement, la poche de colle cède de sorte que la colle se répand dans le volume du premier logement 27 (figure 31), et vient ainsi sceller le premier pion 38.

La colle peut comprendre au moins l'un des éléments choisi parmi : une résine durcissante, une colle époxy, une colle polyester, une colle polyuréthane.

L'invention concerne également un bâtiment formé d'une pluralité de modules de forme parallélépipédique rectangle, lesdits modules étant assemblés et solidarisés les uns aux autres au moyen de dispositifs d'assemblage conforme aux principes exposés de la présente invention.

Bien sûr, l'invention n'est pas limitée aux modes de réalisation décrits et on peut y apporter des variantes de réalisation sans sortir du cadre de l'invention tel que défini par les revendications.

## Revendications

1. Dispositif d'assemblage (1) pour l'assemblage de deux modules dits respectivement premier module et deuxième module, le dispositif d'assemblage (1) comprenant :
- une première cale (20) destinée à être solidaire du premier module et pourvue d'une première face (21);
- un moyen de liaison configuré pour attacher le premier module au deuxième module ;
- une deuxième cale (30) pourvue d'une deuxième face (32) ;
- un moyen de blocage destiné à être intercalé entre la première face (21) et la deuxième face (32), et qui sous l'effet d'un effort d'appui exercé par l'une de la première face (21) et de la deuxième face (32) vers l'autre de la première face (21) et de la deuxième face (32), se déforme de manière à empêcher tout mouvement dudit moyen de blocage et du moyen de liaison selon les directions d'un plan défini par la première face (21).

2. Dispositif d'assemblage (1) selon la revendication 1, dans lequel le moyen de blocage comprend une plaque de blocage (40).

3. Dispositif d'assemblage (1) selon la revendication 1 ou 2, dans lequel le moyen de liaison comprend un connecteur male (10) et un connecteur femelle, le connecteur male (10) étant pourvu d'une base (11) et d'un membre longitudinal (12) qui s'étend selon une direction d'élongation à partir de la base (11), et le connecteur femelle étant destiné à coopérer avec le membre longitudinal (12).

4. Dispositif d'assemblage (1) selon la revendication 2 et la revendication 3, dans lequel la plaque de blocage (40) comprend une ouverture, dite ouverture intermédiaire (41), destinée à être traversée par le membre longitudinal (12).

5. Dispositif d'assemblage (1) selon la revendication 2 et la revendication 3 ou 4, dans lequel la première cale (20) et la deuxième cale (30) sont configurées pour coopérer l'une avec l'autre par emboîtement, et de sorte la déformation du moyen de blocage résulte dudit emboîtement.

6. Dispositif d'assemblage (1) selon la revendication 5, dans lequel la deuxième cale (30) comprend des parois latérales entre lesquelles la première cale (20) est destinée à être emboîtée.

7. Dispositif d'assemblage (1) selon la revendication 6, dans lequel la plaque de blocage (40) comprend des pattes latérales configurées pour être repliées contre les faces latérales de la première cale (20) lors de l'emboîtement de la première cale (20) dans la deuxième cale (30) par coopération avec les parois latérales de la deuxième cale (30).

8. Dispositif d'assemblage (1) selon l'une des revendications 2 à 5, dans lequel la plaque de blocage (40) comprend au moins deux zones de prédécoupe, chaque zone de prédécoupe (43) comprend des entailles (43a) traversantes configurées pour permettre une déformation de ladite zone de prédécoupe (43) par poinçonnage, la première cale (20) comprend des logements, dits premiers logements (27), débouchant par la première face (21), avantageusement de forme cylindrique, chaque premier logement (27) étant destiné à être en correspondance avec une zone de prédécoupe (43), avantageusement, les entailles (43a) traversantes forment une croix.

9. Dispositif d'assemblage (1) selon la revendication 8, dans lequel ledit dispositif d'assemblage (1) comprend des poinçons configurés pour déformer les zones de prédécoupe.

10. Dispositif d'assemblage (1) selon la revendication 9, dans lequel chaque poinçon comprend un pion, dit premier pion (38), porté par la deuxième cale (30) et en projection par rapport à la deuxième face (32), chaque premier pion (38) présentant une taille inférieure à celle des premiers logements (27).

11. Dispositif d'assemblage (1) selon la revendication 9, dans lequel chaque poinçon comprend une première rondelle (51) et une deuxième rondelle (52) entre lesquelles la plaque de blocage (40) est destinée à être intercalée, chaque première rondelle (51) est logée dans un premier logement (27), l'une ou l'autre de la première rondelle (51) et de la deuxième rondelle (52) est surmontée d'un pion, dit deuxième pion (51a), destiné à traverser une ouverture traversante, dite ouverture de blocage (43b), centrée sur la zone de prédécoupe (43) de la plaque de blocage (40), l'ouverture de blocage (43b) présentant un diamètre supérieur à celui du deuxième pion (51a), l'autre de la première rondelle (51) et de la deuxième rondelle (52) comprend une ouverture dans laquelle le deuxième pion (51a) est destiné à être guidé, chaque deuxième rondelle (52) est d'une taille inférieure à celle des premiers logements (27) de manière à permettre la déformation des zones de prédécoupe dès lors que lesdites deuxièmes rondelles sont en appui contre lesdites zones de prédécoupe.

12. Dispositif d'assemblage (1) selon l'une des revendications 4 à 11, dans lequel l'ouverture intermédiaire (41) est configurée pour être traversée sans jeu par le membre longitudinal (12), avantageusement, l'ouverture intermédiaire (41) est conforme en termes de formes et de dimensions avec celles du membre longitudinal (12), chaque première rondelle (51) est montée sans jeu dans le premier logement (27) dans lequel elle est logée.

13. Dispositif d'assemblage (1) selon la revendication 11, dans lequel le moyen de blocage comprend une plaque additionnelle (60) portant les deuxièmes rondelles et intercalée entre la deuxième cale (30) et la plaque de blocage (40).

14. Dispositif d'assemblage (1) selon revendication 3 et la revendication 11, dans lequel la plaque additionnelle (60) comprend une ouverture, dite ouverture additionnelle (61), destinée à être traversée par le membre longitudinal (12), ladite ouverture additionnelle (61) est configurée pour être traversée sans jeu par le membre longitudinal (12), avantageusement l'ouverture additionnelle (61) est conforme en termes de formes et de dimensions du membre longitudinal (12), l'ouverture intermédiaire (41) présente des dimensions supérieures à celles du membre longitudinal (12), chaque première rondelle (51) est montée avec un jeu dans le premier logement (27) dans lequel elle est logée.

15. Dispositif d'assemblage (1) selon l'une des revendications 2 à 4, dans lequel le moyen de blocage comprend, intercalé entre la deuxième cale (30) et la plaque de blocage (40), une plaque de déformation (70), la plaque de blocage (40) comprend deux ailettes latérales et configurées pour se replier contre deux faces latérales, dites faces de blocage et opposées l'une de l'autre, de la première cale (20), la plaque de déformation (70) étant configurée pour provoquer le pliage des ailettes latérales contre les faces de blocage dès lors que la deuxième cale (30) presse ladite plaque de déformation (70) contre la plaque de blocage (40).

16. Dispositif d'assemblage (1) selon la revendication 4 et la revendication 15, dans lequel l'ouverture intermédiaire (41) est configurée pour être traversée sans jeu par le membre longitudinal (12), avantageusement l'ouverture intermédiaire (41) est conforme en termes de formes et de dimensions avec celles du membre longitudinal (12).

17. Dispositif d'assemblage (1) selon la revendication 15 ou 16, dans lequel la plaque de déformation (70) comprend une section centrale plane en appui contre la plaque de blocage (40), deux sections latérales obliques par rapport à la plaque de déformation (70) et se terminant chacune par une section terminale orientée selon une direction opposée à la direction d'extension du membre longitudinal (12), chaque section terminale étant en appui contre une ailette latérale.

18. Dispositif d'assemblage (1) selon la revendication 10, dans lequel chaque premier pion (38), de forme comprend une gorge, dite première gorge, et chaque premier logement (27) comprend une rainure circonférentielle, dite première rainure, les entailles (43a) traversantes délimitant des sections de la zone de prédécoupe (43), dites premières sections, le moyen de liaison comprenant la première rainure, la première gorge et les premières sections, les premières sections étant conformées pour, à la suite du poinçonnage, coopérer avec la première gorge et le premier logement (27) de manière à attacher le premier module au deuxième module.

19. Dispositif selon la revendication 18, dans lequel chaque première section forme un triangle orienté vers le centre de la zone de déformation, ledit triangle comprenant un coin terminal et deux coins latéraux, les deux coins latéraux étant configurés pour être au moins en partie logés dans la première rainure à l'issue de leur déformation par poinçonnage, et le coin terminal étant configuré pour être au moins en partie logé dans la première gorge à l'issue de sa déformation par poinçonnage.

20. Dispositif d'assemblage (1) selon l'une des revendications 1 à 19 et la revendication 3, dans lequel le connecteur male (10) est retenu par la première cale (20) avec un jeu selon les directions du plan défini par la première face (21).

21. Dispositif d'assemblage (1) pour l'assemblage de deux modules dits respectivement premier module et deuxième module, le dispositif d'assemblage (1) comprenant :
- une première cale (20) destinée à être solidaire du premier module et pourvue d'une première face (21), la première cale (20) comprenant des logements, dits premiers logements (27), débouchant par la première face (21) ;
- un moyen de liaison configuré pour attacher le premier module au deuxième module ;
- une deuxième cale (30) pourvue d'une deuxième face (32) et comprend au moins un pion, dit premier pion (38), en projection par rapport à la deuxième face (32), l'au moins un premier pion (38) présentant une taille inférieure à celle des premiers logements (27) ;
- une poche de colle disposée sur le fond des premiers logements, et qui sous l'effet d'un effort d'appui exercé par l'au moins un premier pion, lors du rapprochement de la première face (21) et de la deuxième face (32), cède et laisse la colle qu'elle renferme se répondre dans le volume délimité par le premier logement afin de sceller la premier pion.
